Europäisches Patentamt

European Patent Office

Office européen des brevets

(11) Publication number: **0 365 735**
**A1**

## EUROPEAN PATENT APPLICATION

(21) Application number: 88830452.4

(51) Int. Cl.5: **A61C 15/04**

(22) Date of filing: 26.10.88

(43) Date of publication of application:
02.05.90 Bulletin 90/18

(84) Designated Contracting States:
AT BE CH DE ES FR GB GR IT LI LU NL SE

(71) Applicant: **Anzani, Giuseppe**
**Via L. Manara 84 Fraz. S. Lorenzo**
**I-20015 Parabiago(IT)**

(72) Inventor: **Anzani, Giuseppe**
**Via L. Manara 84 Fraz. S. Lorenzo**
**I-20015 Parabiago(IT)**

(74) Representative: **Lecce, Giovanni**
**Ufficio Internazionale Calciati S.r.l. Via G.**
**Negri 10**
**I-20123 Milano(IT)**

(54) **Dental accessory for the support and use of thread for interdental cleaning.**

(57) Dental accessory for the support and use of thread comprising a tank (1) provided with pin (2) in which a ball (3) of thread (4) is inserted; a small arch (10) which extends laterally and tangentially from said tank (1), said small arch (10) having the curved free end (11) equipped with a stop throat (13); and a hook (14) fixed to the surface of said tank (1) and aligned to the stop throat (13). The thread (14) is unwound from the ball (3), passed on the upper external surface of the small arch (10) and of the curved end (11) and stretched between the stop (13)à and the hook (14).

_fig. 1_

Xerox Copy Centre

## DENTAL ACCESSORY FOR THE SUPPORT AND USE OF THREAD FOR INTERDENTAL CLEANING

The present invention refers to a dental accessory for the support and use of thread for interdental cleaning.

As noted, thin threads or filaments called dental threads are generally used for interdental cleaning; these may be of silk or other material, for example plastic.

Said threads for interdental cleaning are substantially produced and packed in small boxes from which users extract, from time to time, pieces of a certain length.

For use, the pieces of thread are stretched winding the two ends round the upper parts of the index or other fingers, of both hands, and made pass through the space between the teeth.

Although in this way thread tension is fairly effective, it is evident that this effect is only obtained with rather tricky manoeuvres, as at least one finger of one hand must always be inside the mouth.

The position of the thread between the fingers makes it possible to carry out only cleaning of the spaces between the upper incisor and canine teeth, the upper and lower premolars or the molars, is very difficult.

Another problem is that, for good cleaning, within the limits of the above difficulties, users are forced to use a considerable quantity of threads and wind the ends round their fingers many times for perfect fixing.

The object of the present invention is to eliminate the above problems.

More in particular, the object of the present invention is to provide a support for the containment, fixing, tension and use of dental thread which prevents the above problems. According to the present invention, the above objects are obtained by means of a dental accessory for the support, tension and use of dental thread comprising a tank to contain spools of thread, a small arch with curved end which extends outwards and tangentially to said tank, and a stop hook placed on said tank opposite said curved end. The thread, through a hole with elastic friction, is first passed along the outside surface of the small arch then stretched between the curved end of same and the stop hook. With the dental accessory of the present invention, the thread is kept rigorously protected inside a tank, from which, for use, it is unthreaded and stretched between the ends of the small arch.

The small arch can be easily inserted in the mouth and never comes into direct contact with either the upper or lower teeth. The small arch is held with two fingers which engage only the side surfaces of the tank containing the thread, from whose outside surface extend the small arch and the gripping and fixing hook of the free end of the thread. The advantages of the dental accessory of the present invention mainly consist in the fact that interdental cleaning takes place much more simply, correctly and rapidly, without the need to insert also the fingers in the mouth. Fur thermore, the cleaning thread remains taut between the ends of the small arch and the alternate manual cleaning movement is made operating on the tank containing the thread.

Another advantage is that replacement of the taut thread used is very quick and thread consumption is greatly reduced.

The constructive and functional characteristics of the dental accessory of the present invention can be better understood from the following detailed description in which reference is made to the enclosed drawings which show one of its constructive forms, given solely as illustrative but unbiding example, in which:

fig. 1 shows the perspective view of the dental accessory of the present invention, and

fig. 2 illustrates the accessory of figure 1 during use.

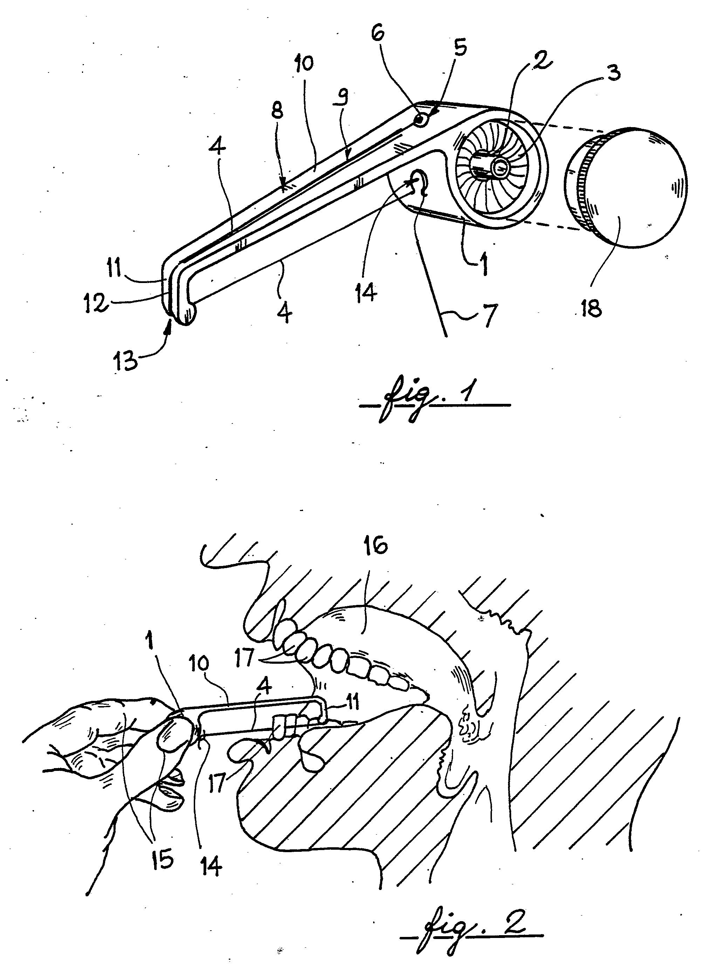

With reference to the drawings,the dental accessory for the support and use of thread for interdental cleaning comprises a tank 1, provided with a central pin 2, in which a ball 3 of thread 4 is inserted. The ball 3 is inserted on pin 2 which acts as guide during the unwinding phases of the thread 4.

The tank 1 communicates with its upper or outside surface by means of a hole 5 provided with an anular means with friction 6.

A small arch 10 extends laterally and preferably tangentially from tank 1, with free end 11 curved. The external or upper surface 8 of the small arch 10 is equipped with a central longitudinal groove 9. The curved end 11 is also equipped with a central longitudinal groove 12, communicating and aligned with that of the small arch 10 and the hole 5.

Said groove 12 terminates at the lower end with a throat 13. A hook 14 fixed on the surface of the tank 1 in opposite position and aligned to the curved end 11. The tank 1 is equipped with a closing cover 18.

The head of the thread 4 is unwound from the ball and passed on the external surface of the tank 1 through the hole with friction means 6.

The round friction means 6 is preferably composed of a small elastic ring, of rubber for example, in the central hole of which the thread 4 slides with sufficient friction. To facilitate insertion of the thread 4 in the central hole of the friction means 6, its head is preferably connected to a metallic filiform end or a rigid plastic end 7. Said stiff end 7 is then cut in the subsequent stretching phase of said thread.

The thread 4, which has left the hole 5 by means of friction means 6, is inserted in the longitudinal groove along the upper surface 8 of the small arch 10.

The thread 4 is then inserted in the central groove 12 of the curved end 11 then in the throat 13 which fixes it sufficiently. The end of the thread 4 is then inserted under tension and fixed to the hook 14 which fixes it stiffly. In this condition, part of the thread is therefore perfectly taut between the throat 13 of the curved end 11 and the hook 14.

Gripping the dental accessory thus prepared between the fingers 15 of one hand, with grip between the lateral walls of the tank 1, it can be easily inserted in the mouth 16, so that the stretched thread 4 is inserted between the spaces between the teeth 17..

Insertion in the mouth can thus take place easily, as only the small arch 10 is inserted in it, with thread 4 taut, while the rest, tank 1 and finger 15, remain outside. In the same way, the accessory can be used in straight position between all lower teeth, and in reverse position between all upper teeth.

When the stretched thread 4 must be changed, it is detached from hook 14 and throad 13, thus pulled to untrhead a new part of it from tank 1 then reconnected between throat 13 and hook 14. Hook 14 also acts as cutting member of the thread end already used and to be thrown away.

One of the lateral walls of tank 1 can be closed by a plug 18.

The present invention has been illustrated and described referring to one of its preferred forms; therefore, in its practical implementation, various modifications and/or changes can be made.

## Claims

1) Dental accessory for the support and use of thread for interdental cleaning, characterized by the fact that it comprises a tank (1) to contain a spool of thread (4), a small arch (10) which extends laterally from said tank and having the curved free end (11) equipped with a stop throat (13) and a hook (14) projecting from the surface of the tank (1) opposite said end (11), said hook being aligned to said throat (13).

2) Dental accessory according to claim 1, characterized by the fact that the tank (1) comprises a closing cover (18), a guide pin (2) for the spool (3) of thread (4) and a through-hole (5) towards its upper external surface, equipped with a round friction (6).

3) Dental accessory according to claim 1 or 2, characterized by the fact that the upper surface (8) of the small arch (10) and the external surface of the curved end (11) are equipped with grooves (9) and (12), aligned to each other, with said round friction (6) and said throat (13).

4) Dental accessory according to any of the previous claims, characterized by the fact that the tension hook (14) acts as cutting member for the thread ends (4).

5) Dental accessory according to any of the previous claims, characterized by the fact that the head of the thread (4) is equipped with a filiform end (7) in metal or stiff plastic.

_fig. 1_

_fig. 2_

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 655 234 (BOWDEN)<br>* the whole document * | 1 | A 61 C 15/04 |
| A | | 2-4 | |
| A | US-A-3 746 017 (CASSELMAN)<br>* column 3, line 4 - column 4, line 29;<br>figures 1 and 6 * | 1-3 | |
| A | US-A-3 858 594 (ENSMINGER)<br>* column 1, line 61 - column 2, line 5;<br>figures 2 and 3 * | 1,4 | |
| A | US-A-3 930 059 (WELLS)<br>* column 3, lines 12-50; figure 2 * | 5 | |
| | | | **TECHNICAL FIELDS SEARCHED (Int. Cl.5)**<br><br>A 61 C 15/00 |

The present search report has been drawn up for all claims

| Place of search | Date of completion of the search | Examiner |
|---|---|---|
| BERLIN | 12-06-1989 | SIMON J J P |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P0401)